# EUROPÄISCHE PATENTSCHRIFT

(11) **EP 3 994 039 B1**
(45) Veröffentlichungstag und Bekanntmachung des Hinweises auf die Patenterteilung: **12.02.2025**
(21) Anmeldenummer: 20722553.3
(22) Anmeldetag: 28.04.2020
(51) Int. Cl.: B60T 8/17, B60T 8/32, B60T 7/22

(54) **VERFAHREN UND VORRICHTUNG ZUR DURCHFÜHRUNG EINER AUTONOMEN BREMSUNG BEI EINEM EINSPURIGEN KRAFTFAHRZEUG**
METHOD AND DEVICE FOR CARRYING OUT AUTONOMOUS BRAKING IN A SINGLE-TRACK MOTOR VEHICLE
PROCÉDÉ ET DISPOSITIF DE RÉALISATION D'UN FREINAGE AUTONOME DANS UN VÉHICULE À MOTEUR MONOVOIE

(30) Priorität: 04.07.2019 DE 102019209864
(43) Veröffentlichungstag der Anmeldung: 11.05.2022
(73) Patentinhaber: Robert Bosch GmbH, 70442 Stuttgart (DE)
(72) Erfinder: WAHL, Anja, 71706 Markgroeningen (DE); HENZLER, Markus, 70197 Stuttgart (DE)
(86) Internationale Anmeldenummer: PCT/EP2020/061712
(87) Internationale Veröffentlichungsnummer: WO 2021/001080

(56) Entgegenhaltungen:
- DE-A1- 102012 221 615
- US-A1- 2017 192 433
- US-A1- 2019 077 396

## Beschreibung

### Stand der Technik

Die nicht vorveröffentlichte DE 10 2018 221 720.3 betrifft ein Verfahren zur Durchführung einer autonomen Bremsung bei einem einspurigen Kraftfahrzeug, bei dem
- mittels einer Umfeldsensorik die Notwendigkeit einer Fahrzeugverzögerung detektiert wird,
- abhängig davon eine fahrerunabhängige Fahrzeugverzögerung eingeleitet wird,
- nach Einleiten der Fahrzeugverzögerung eine die Bereitschaft des Fahrers für die Beherrschung des Fahrzeugverzögerungsmanövers kennzeichnende Fahrerbereitschaftsgröße ermittelt wird und
- abhängig von der Fahrerbereitschaftsgröße der zeitliche Verlauf der Fahrzeugverzögerung fortgesetzt wird.

### Offenbarung der Erfindung

Die Erfindung betrifft ein Verfahren nach Anspruch 1 zur Durchführung einer fahrerunabhängigen bzw. autonomen Bremsung bei einem einspurigen Kraftfahrzeug, bei dem
- mittels einer Umfeldsensorik die Notwendigkeit einer fahrerunabhängigen Fahrzeugverzögerung bzw. fahrerunabhängigen Bremsung bzw. autonomen Bremsung detektiert wird,
- bei Vorliegen der Notwendigkeit einer Fahrzeugverzögerung vor deren Durchführung ein fahrerunabhängiger Testbremsvorgang mit vorgegebener zeitlicher Länge durchgeführt wird,
- während oder nach der Durchführung des Testbremsvorgangs eine die Bereitschaft des Fahrers für die Beherrschung der als notwendig detektierten Fahrzeugverzögerung kennzeichnende Fahrerbereitschaftsgröße ermittelt wird und
- nach Abschluss des Testbremsvorgangs die fahrerunabhängige Fahrzeugverzögerung eingeleitet wird, wobei der zeitliche Verlauf der

Fahrzeugverzögerung abhängig von der Fahrerbereitschaftsgröße ist. Die Erfindung erlaubt die Reduzierung der Gefahr bei einer automatischen Notbremsung eines Zweirads. Ein nicht auf die Bremsung vorbereiteter und abgelenkter Fahrer kann in einer solchen Situation völlig die Kontrolle über das Zweirad verlieren, deshalb ist die Einbeziehung einer die Bereitschaft des Fahrers für die Beherrschung des Fahrzeugverzögerungsmanövers kennzeichnenden Fahrerbereitschaftsgröße in das automatische Bremsmanöver bzw. Notbremsmanöver sinnvoll. Der Testbremsvorgang führt zu einer kurzzeitigen Verzögerung und ist derart gestaltet, dass er auch bei fehlender physischer Bremsbereitschaft des Fahrers, z.B. bei Blick zur Seite oder einhändiger Fahrt, unkritisch ist. Der Testbremsvorgang wird über eine Motormomentabsenkung oder über eine Motormomentabsenkung bei gleichzeitiger Bremsmomentenerhöhung an einem oder beiden Rädern des Motorrads realisiert. Der Testbremsvorgang wirkt nur über eine kurze Zeit und verzögert das Motorrad nur geringfügig. Der Testbremsvorgang wirkt für den unaufmerksamen oder abgelenkten Fahrer als Fahrerwarnung und kann deshalb auch als Warnruck bezeichnet werden.

Eine vorteilhafte Ausgestaltung der Erfindung ist dadurch gekennzeichnet, dass es sich bei der Umfeldsensorik um eine Radarsensorik, eine Lidarsensorik oder eine Videosensorik handelt. Derartige Sensoriken sind im PKW-Bereich bereits weit verbreitet und können im Zweiradbereich mitbenutzt werden.

Eine vorteilhafte Ausgestaltung der Erfindung ist dadurch gekennzeichnet, dass die Fahrerbereitschaftsgröße wenigstens zwei unterschiedliche Werte annehmen kann.

Eine vorteilhafte Ausgestaltung der Erfindung ist dadurch gekennzeichnet, dass die Fahrerbereitschaftsgröße zwei Werte annehmen kann, wobei
- einer der beiden Werte einen für das Fahrzeugverzögerungsmanöver bereiten Zustand des Fahrers signalisiert,
- der andere der beiden Werte einen für das Fahrzeugverzögerungmanöver nicht bereiten Zustand des Fahrers signalisiert.

Eine vorteilhafte Ausgestaltung der Erfindung ist dadurch gekennzeichnet, dass
- bei einem bereiten Zustand des Fahrers die autonome Bremsung mit einem geplanten Sollbremskraftverlauf durchgeführt wird,
- bei einem nicht bereiten Zustand des Fahrers mit einem Bremskraftverlauf durchgeführt, welcher im Vergleich zum Bremskraftverlauf bei einem bereiten Zustand des Fahrers eine geringere Verzögerung und/oder einen geringeren Ruck aufweist.

Durch die Durchführung der Notbremsung mit einer geringeren Intensität bei einem als nicht bereit erkannten Fahrerzustand kann das Risiko des Sturzes des Fahrers infolge eines Kontrollverlustes über das Zweirad reduziert werden. Dennoch wird durch die schwächere Notbremsung die Aufmerksamkeit eines abgelenkten Fahrers auf die aktuelle Fahrsituation gelenkt, da die Notbremsung zugleich als Fahrerwarnung wirkt.

Eine vorteilhafte Ausgestaltung der Erfindung ist dadurch gekennzeichnet, dass die Fahrerbereitschaftsgröße nach Einleitung des Testbremsvorgangs anhand der Ausgangssignale einer am Kraftfahrzeug angebrachten Inertialsensorik ermittelt wird.

Eine vorteilhafte Ausgestaltung der Erfindung ist dadurch gekennzeichnet, dass die Fahrerbereitschaftsgröße nach Einleitung des Testbremsvorgangs anhand des Lenkwinkels und/oder des Lenkmoments ermittelt wird.

Eine vorteilhafte Ausgestaltung der Erfindung ist dadurch gekennzeichnet, dass die Fahrerbereitschaftsgröße nach Einleitung des Testbremsvorgangs anhand der Ausgangssignale am Kraftfahrzeug angebrachter druckempfindlicher Berührungssensoren ermittelt wird.

Eine vorteilhafte Ausgestaltung der Erfindung ist dadurch gekennzeichnet, dass die Fahrerbereitschaftsgröße nach Einleitung des Testbremsvorgangs anhand der Ausgangssignale von Raddrehzahlsensoren oder Einfederwegsensoren ermittelt wird.

Weiter umfasst die Erfindung eine Vorrichtung zur Durchführung eines eben beschriebenen erfindungsgemäßen Verfahrens, enthaltend zumindest eine Umfeldsensorik, die eingerichtet ist, die Notwendigkeit einer Fahrzeugverzögerung zu detektieren, ein Steuergerät, das eingerichtet ist, bei Vorliegen der Notwendigkeit einer Fahrzeugverzögerung vor deren Durchführung einen fahrerunabhängigen Testbremsvorgang mit vorgegebener zeitlicher Länge durchzuführen, und weiter eingerichtet ist, während oder nach der Durchführung des Tetbremsvorgangs eine Bereitschaft des Fahrers für die Berherrschung der als notwendig detektierten Fahrzeugverzögerung kennzeichnende Fahrerbereitschaftsgröße zu ermitteln sowie ferner eingerichtet ist, nach Abschluss des Testbremsvorgangs eine Fahrzeugverzögrung einzuleiten, wobei der zeitliche Verlauf der Fahrzeugverzögerung abhängig von der Fahrerbereitschaftsgröße istDabei handelt es sich insbesondere um ein Steuergerät, in welchem der Programmcode zur Durchführung der erfindungsgemäßen Verfahren hinterlegt ist.

Die Zeichnung umfasst die Figuren 1 bis 3.

In Fig. 1 ist der zeitliche Ablauf einer Ausgestaltung der Erfindung dargestellt.

In Fig. 2 ist ein Zustandsdiagramm für drei Zustände dargestellt, wobei es sich bei zwei Zuständen um Fahrerzustände handelt.

In Fig. 3 ist eine schematische Seitenansicht eines Motorrads mit wesentlichen, für die Erfindung nutzbaren Motorradkomponenten dargestellt.

Die fortschreitende Entwicklung höherer Assistenzsysteme für Kraftradfahrer setzt eine genaue Kenntnis des Fahrerzustandes voraus. So muss der Fahrer, wird beispielsweise eine automatische Bremsung eingeleitet, hierfür bereit sein. Dies setzt insbesondere die physische Bereitschaft voraus. Für eine vollständige Kontrolle ist die beidhändige Führung des Kraftrades notwendig. Mittels geeigneter Sensorik kann diese Bereitschaft, z.B. ob der Fahrer beide Hände am Lenker hat oder nicht, während eines bereits ausgelösten Bremsmanövers erkannt werden.

Wie bei Personenkraftwagen ist auch bei Motorrädern davon auszugehen, dass vor einer automatischen Notbremsung eine Warnung ausgegeben wird. Der Warnruck zur Anzeige einer drohenden Kollisionsgefahr mit ggf. anschließender automatischer Notbremsung scheint für Motorräder besonders geeignet, da im Gegensatz zur Fahrt mit dem PKW im speziellen optische aber auch akustische Warnsignale bei der Motorradfahrt schwerer wahrzunehmen sind.

Die Erfindung umfasst die Erkennung des Fahrerzustandes und damit der physischen Bremsbereitschaft des Motorradfahrers für eine folgende automatische Notbremsung während des Warnrucks mit Sensoren, die sich bereits am Fahrzeug befinden. Das Triggern und die Ausprägung bzw. Stärke der automatischen Notbremsung erfolgt in Abhängigkeit des erkannten Fahrerzustandes.

Mittels vorausschauender Umfeldsensorik kann das Umfeld erfasst und eine drohende Kollision erkannt werden. Um diese dem Fahrer vor einer automatischen Notbremsung anzuzeigen, wird ein Warnruck getriggert. Der Warnruck entspricht einer kurzzeitigen Verzögerung und ist derart gestaltet, dass er auch bei fehlender physischer Bremsbereitschaft des Fahrers, z.B. bei Blick zur Seite oder einhändiger Fahrt, unkritisch ist. Der Warnruck wird über eine Motormomentabsenkung oder über eine Motormomentabsenkung bei gleichzeitiger Bremsmomentenerhöhung an einem oder beiden Rädern des Motorrads realisiert. Der Warnruck wirkt nur über eine kurze Zeit und verzögert das Motorrad nur geringfügig.

Die Erfindung beinhaltet die Modellierung des Zustands des Fahrers durch Messung der Gesamtsystemreaktion auf den Warnruck. In einem ersten Schritt kann z.B. aus der Messung der Inertialsensorik eine Bremsbereitschaft des Fahrers abgeleitet werden. Hat der Fahrer beispielsweise während der kurzzeitigen Verzögerung durch den Warnruck nur eine Hand am Lenker, so bewirkt das Abstützmoment des Fahrers eine Lenkerbewegung. Diese Bewegung bewirkt eine Änderung der Dynamik des Gesamtsystems, welche mit der Inertialmesstechnik registriert wird. Daraus kann geschlossen werden, dass der Fahrer nicht bereit ist für das anschließend vorgesehene nominelle automatische Notbremsmanöver.

Mithilfe der Inertialsensorik können idealerweise die Drehraten und Verzögerungen des Motorrads in alle drei Raumrichtungen gemessen werden. Ausführungen der Erfindung können aber auch nur einzelne Inertialsignale verwenden.
- In einer Ausprägung der Erfindung nutzt das Modell zur Fahrerzustandserkennung ausschließlich die gemessene Rollrate, d.h. die Drehrate um die Fahrzeuglängsachse des Motorrads.
- Eine Ausprägung nutzt neben der Fahrzeug-Rollrate die Fahrzeug-Gierrate. d.h. die Drehung des Fahrzeugs um die Hochachse, im Modell zur Fahrerzustandserkennung
- Eine weitere Ausprägung nutzt die Fahrzeug-Rollrate, -Gierrate und Querbeschleunigung.

Zur Erkennung des Fahrerzustandes während des Warnrucks werden in einer weiteren Ausprägung neben Signalen der Inertialsensorik auch Signale eines Lenkwinkelsensors ausgewertet.

Um das Modell zur Erkennung des Fahrerzustandes darüber hinaus zu erweitern, können zusätzliche Sensoren ausgewertet werden:
- Lenkmomentsensoren um die Lenkreaktion zu messen.
- Federwegsensorik um die Nickbewegung des Fahrzeugs zu messen
- die Raddrehzahlsensoren
- druckempfindliche Berührungssensoren um das Maß der Abstützung an Kontaktpunkten, z.B. Griffen, Knien oder Füßen, zu messen

Abhängig vom erkannten Fahrerzustand wird ggf. die anschließende automatische Notbremsung getriggert. Wird der Fahrerzustand "bereit für die Bremsung" erkannt, dann erfolgt die nominelle automatische Notbremsung. Wird der Fahrerzustand "nicht bremsbereit" erkannt, dann wird eine automatische Bremsung mit angepasster Verzögerung, so dass diese auch im nicht bremsbereiten Zustand des Fahrers unkritisch ist, ausgelöst. So kann in einer Ausführung der angepassten Bremsung der Betrag der Verzögerung gegenüber dem Nominalwert reduziert werden. In einer weiteren Ausführung kann der Ruck, d.h. der Gradient des Verzögerungsaufbaus, ebenfalls reduziert werden.

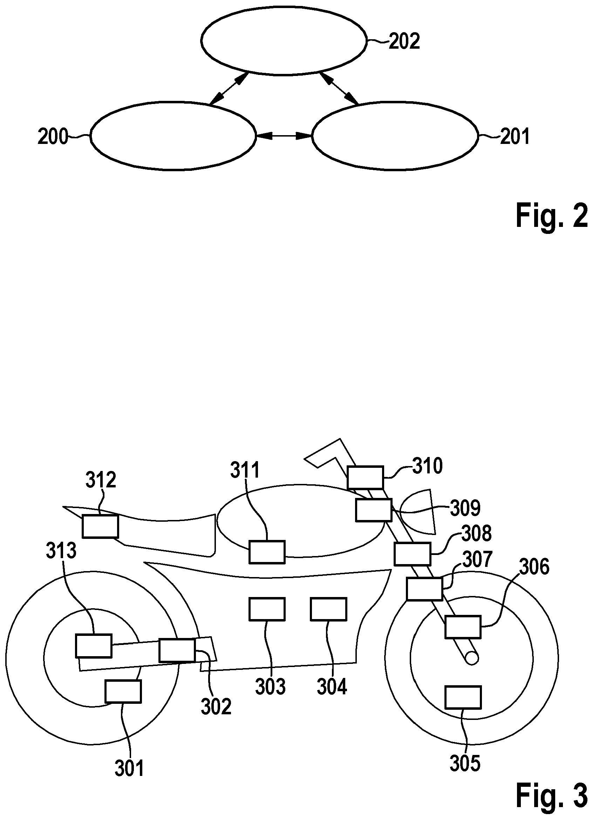

Das Modell des Fahrers kann zum Beispiel drei Zustände beinhalten, wie es in Fig. 2 dargestellt ist. Dort kennzeichnet Block 200 den Zustand "neutral", Block 201 den Zustand "nicht bereit für Manöver" und Block 202 den Zustand "bereit für Manöver". Dabei ist zu beachten, dass es sich bei dem Zustand "bereit für Manöver" um denjenigen Zustand handelt, welcher angenommen wird, bevor der Fahrerzustand ermittelt wurde, welcher entweder den Status "bereit für Manöver" oder "nicht bereit für Manöver" annehmen kann.

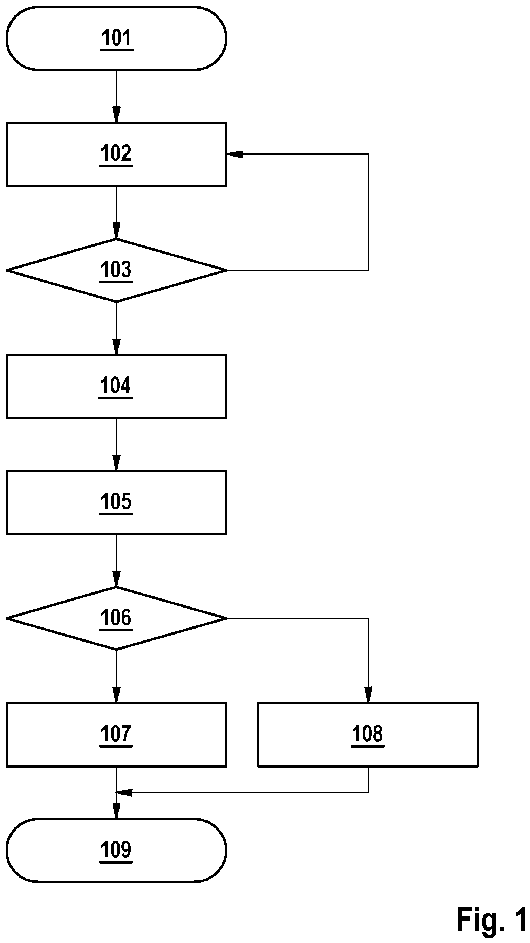

Fig. 1 zeigt den zeitlichen Ablauf einer Ausgestaltung der Erfindung. Nach dem Start des Verfahrens in Block 101 wird in Block 102 eine Umfelderfassung durchgeführt. Anschließend wird in Block 103 ermittelt, ob eine automatische Bremsung bzw. Notbremsung erforderlich ist. Ist dies der Fall, dann wird in Block 104 ein fahrerunabhängiger Warnruck bzw. Testbremsvorgang durchgeführt. Ist keine Bremsung erforderlich, dann wird von Block 103 zu Block 102 zurückgekehrt. Anhand während des Warnrucks erfasster Daten wird in Block 105 mittels eines Fahrerzustandsmodells die momentane Bereitschaft des Fahrers zur Beherrschung der erforderlichen automatischen Bremsung ermittelt. Abhängig davon in Block 106 über den weiteren Verlauf der Bremsung entschieden. In Fig. 1 werden dazu beispielhaft zwei mögliche zeitliche Bremskraftverläufe verwendet. Wird der Fahrerzustand als bremsbereit ermittelt, dann wird in Block 107 eine automatische Bremsung wie geplant durchgeführt. Wird der Fahrerzustand hingegen als nicht bremsbereit ermittelt, dann wird in Block 108 eine automatische Bremsung nur in abgeschwächter Form durchgeführt. In Block 109 endet das Verfahren.

Fig. 2 zeigt in Form eines Zustandsgraphen beispielhaft die folgenden Zustände:
Block 200: Zustand neutral
Block 201: Fahrerzustand "nicht bereit für automatisches Bremsmanöver"
Block 202: Fahrerzustand "bereit für automatisches Bremsmanöver"
Die beidseitig gerichteten Pfeilverbindungen zwischen den drei Zuständen weisen darauf hin, dass auch ein Übergang zwischen den unterschiedlichen Zuständen möglich ist, wenn sich der Fahrerzustand während des automatischen Bremsmanövers ändert.

In Fig. 3 ist eine schematische Seitenansicht eines Motorrads mit den folgenden wesentlichen, für die Erfindung nutzbaren Motorradkomponenten dargestellt.
301: Hinterradbremse
302: Federwegsensor am Hinterrad
303: Bremssteuergerät
304: Motorsteuergerät
305: Vorderradbremse
306: Raddrehzahlsensor am Vorderrad
307: Federwegsensor am Vorderrad
308: Umgebungssensor
309: Lenkwinkelsensor
310 Lenkmomentensensor
311: Auswerteeinheit für den Fahrerzustand
312: Inertialmesstechnik
313: Raddrehzahlsensor am Vorderrad

## Patentansprüche

1. Verfahren zur Durchführung einer autonomen Bremsung bei einem einspurigen Kraftfahrzeug, bei dem
- mittels einer Umfeldsensorik die Notwendigkeit einer Fahrzeugverzögerung detektiert wird (103),
- bei Vorliegen der Notwendigkeit einer Fahrzeugverzögerung vor deren Durchführung ein fahrerunabhängiger Testbremsvorgang mit vorgegebener zeitlicher Länge durchgeführt wird (104),
- während oder nach der Durchführung des Testbremsvorgangs (104) eine die Bereitschaft des Fahrers für die Beherrschung der als notwendig detektierten Fahrzeugverzögerung kennzeichnende Fahrerbereitschaftsgröße ermittelt wird (106) und
- nach Abschluss des Testbremsvorgangs die Fahrzeugverzögerung eingeleitet wird, wobei der zeitliche Verlauf der Fahrzeugverzögerung abhängig von der Fahrerbereitschaftsgröße ist (107, 108).

2. Verfahren nach Anspruch 1, **dadurch gekennzeichnet, dass** es sich bei der Umfeldsensorik (308) um eine Radarsensorik, eine Lidarsensorik oder eine Videosensorik handelt.

3. Verfahren nach Anspruch 1, **dadurch gekennzeichnet, dass** die Fahrerbereitschaftsgröße wenigstens zwei unterschiedliche Werte annehmen kann.

4. Verfahren nach Anspruch 3, **dadurch gekennzeichnet, dass** die Fahrerbereitschaftsgröße zwei Werte annehmen kann, wobei
- einer der beiden Werte einen für das Fahrzeugverzögerungsmanöver bereiten Zustand des Fahrers signalisiert,
- der andere der beiden Werte einen für das Fahrzeugverzögerungmanöver nicht bereiten Zustand des Fahrers signalisiert.

5. Verfahren nach Anspruch 4, **dadurch gekennzeichnet, dass**
- bei einem bereiten Zustand des Fahrers die autonome Bremsung mit einem geplanten Sollbremskraftverlauf durchgeführt wird (107),
- bei einem nicht bereiten Zustand des Fahrers die autonome Bremsung mit einem Bremskraftverlauf durchgeführt wird, welcher im Vergleich zum Bremskraftverlauf bei einem bereiten Zustand des Fahrers eine geringere Verzögerung und/oder einen geringeren Ruck aufweist (108).

6. Verfahren nach Anspruch 1, **dadurch gekennzeichnet, dass** die Fahrerbereitschaftsgröße nach Einleitung des Testbremsvorgangs anhand der Ausgangssignale einer am Kraftfahrzeug angebrachten Inertialsensorik (312) ermittelt wird.

7. Verfahren nach Anspruch 1, **dadurch gekennzeichnet, dass** die Fahrerbereitschaftsgröße nach Einleitung des Testbremsvorgangs anhand des Lenkwinkels und/oder des Lenkmoments ermittelt wird.

8. Verfahren nach Anspruch 1, **dadurch gekennzeichnet, dass** die Fahrerbereitschaftsgröße nach Einleiten des Testbremsvorgangs anhand der Ausgangssignale am Kraftfahrzeug angebrachter druckempfindlicher Berührungssensoren ermittelt wird.

9. Verfahren nach Anspruch 1, **dadurch gekennzeichnet, dass** die Fahrerbereitschaftsgröße nach Einleiten des Testbremsvorgangs anhand der Ausgangssignale von Raddrehzahlsensoren (306, 313) oder Einfederwegsensoren (307) ermittelt wird.

10. Vorrichtung zur Durchführung eines Verfahrens
nach einem der Ansprüche 1 bis 9, enthaltend zumindest eine Umfeldsensorik, die eingerichtet ist, die Notwendigkeit einer Fahrzeugverzögerung zu detektieren, und
ein Steuergerät, das eingerichtet ist,
bei Vorliegen der Notwendigkeit einer Fahrzeugverzögerung vor deren Durchführung einen fahrerunabhängigen Testbremsvorgang mit vorgegebener zeitlicher Länge durchzuführen, und
weiter eingerichtet ist, während oder nach der Durchführung des Testbremsvorgangs eine Bereitschaft des Fahrers für die Berherrschung der als notwendig detektierten Fahrzeugverzögerung kennzeichnende Fahrerbereitschaftsgröße zu ermitteln sowie
ferner eingerichtet ist, nach Abschluss des Testbremsvorgangs eine Fahrzeugverzögrung einzuleiten, wobei der zeitliche Verlauf der Fahrzeugverzögerung abhängig von der Fahrerbereitschaftsgröße ist.

## Claims

1. Method for carrying out autonomous braking in the case of a single-track motor vehicle, in which
- the need for a vehicle deceleration is detected (103) by means of an environment sensor system,
- when there is the need for a vehicle deceleration, before it is carried out a rider-independent test braking operation of a predefined length of time is carried out (104),
- while or after carrying out the test braking operation (104), a rider readiness variable characterizing the readiness of the rider to control the vehicle deceleration detected as needed is ascertained (106) and
- after completion of the test braking operation, the vehicle deceleration is initiated, the temporal progression of the vehicle deceleration being dependent on the rider readiness variable (107, 108).

2. Method according to Claim 1, **characterized in that** the environment sensor system (308) is a radar sensor system, a lidar sensor system or a video sensor system.

3. Method according to Claim 1, **characterized in that** the rider readiness variable can assume at least two different values.

4. Method according to Claim 3, **characterized in that** the rider readiness variable can assume two values, wherein
- one of the two values signals a state of the rider in which the rider is ready for the vehicle deceleration manoeuvre,
- the other of the two values signals a state of the rider in which the rider is not ready for the vehicle deceleration manoeuvre.

5. Method according to Claim 4, **characterized in that**
- in the case of a ready state of the rider, the autonomous braking is carried out with a planned setpoint braking force progression (107),
- in the case of an unready state of the rider, the autonomous braking is carried out with a braking force progression which has a lower deceleration and/or a less intense jolt in comparison with the braking force progression in the case of a ready state of the rider (108).

6. Method according to Claim 1, **characterized in that** the rider readiness variable is ascertained after initiating the test braking operation on the basis of the output signals of an inertial sensor system (312) mounted on the motor vehicle.

7. Method according to Claim 1, **characterized in that** the rider readiness variable is ascertained after initiating the test braking operation on the basis of the steering angle and/or the steering torque.

8. Method according to Claim 1, **characterized in that** the rider readiness variable is ascertained after initiating the test braking operation on the basis of the output signals of pressure-sensitive contact sensors mounted on the motor vehicle.

9. Method according to Claim 1, **characterized in that** the rider readiness variable is ascertained after initiating the test braking operation on the basis of the output signals of wheel-speed sensors (306, 313) or compression-travel sensors (307).

10. Device for carrying out a method according to one of Claims 1 to 9, including at least
an environment sensor system, which is set up so as to detect the need for a vehicle deceleration, and
a control unit, which is set up so as,
when there is the need for a vehicle deceleration, before it is carried out to carry out a rider-independent test braking operation of a predefined length of time, and
is also set up so as, while or after carrying out the test braking operation, to ascertain a rider readiness variable characterizing the readiness of the rider to control the vehicle deceleration detected as needed and
is also set up so as, after completion of the test braking operation, to initiate vehicle deceleration, the temporal progression of the vehicle deceleration being dependent on the rider readiness variable.

## Revendications

1. Procédé permettant d'effectuer un freinage autonome sur un véhicule automobile à voie unique, dans lequel
- la nécessité d'une décélération de véhicule est détectée (103) au moyen d'un système de capteurs d'environnement,
- en présence de la nécessité d'une décélération du véhicule, avant l'exécution de celle-ci, un processus de freinage d'essai indépendant du conducteur, ayant une durée prédéfinie, est exécuté (104),
- pendant ou après l'exécution du processus de freinage d'essai (104), il est déterminé (106) une valeur de disponibilité du conducteur caractérisant la disponibilité du conducteur à maîtriser la décélération du véhicule détectée comme nécessaire, et
- à la fin du processus de freinage d'essai, la décélération du véhicule est déclenchée, l'évolution temporelle de la décélération du véhicule dépendant de la valeur de disponibilité du conducteur (107, 108).

2. Procédé selon la revendication 1, **caractérisé en ce que** les capteurs d'environnement (308) sont des capteurs radar, des capteurs lidar ou des capteurs vidéo.

3. Procédé selon la revendication 1, **caractérisé en ce que** la valeur de disponibilité du conducteur peut prendre au moins deux valeurs différentes.

4. Procédé selon la revendication 3, **caractérisé en ce que** la valeur de disponibilité du conducteur peut prendre deux valeurs,
- l'une des deux valeurs signalant que le conducteur est prêt pour la manœuvre de décélération du véhicule,
- l'autre des deux valeurs signalant que le conducteur n'est pas prêt pour la manœuvre de décélération du véhicule.

5. Procédé selon la revendication 4, **caractérisé en ce que**
- dans le cas d'un état prêt du conducteur, le freinage autonome est effectué selon une courbe de force de freinage de consigne planifiée (107),
- dans le cas d'un état non prêt du conducteur, le freinage autonome est effectué selon une courbe de force de freinage qui, par rapport à la courbe de force de freinage dans le cas d'un état prêt du conducteur, présente une décélération plus faible et/ou un à-coup plus faible (108).

6. Procédé selon la revendication 1, **caractérisé en ce que** la valeur de disponibilité du conducteur est déterminée après le déclenchement du processus de freinage d'essai en utilisant des signaux de sortie d'un système de capteurs inertiels (312) monté sur le véhicule automobile.

7. Procédé selon la revendication 1, **caractérisé en ce que** la valeur de disponibilité du conducteur est déterminée après le déclenchement du processus de freinage d'essai en utilisant l'angle de braquage et/ou le couple de braquage.

8. Procédé selon la revendication 1, **caractérisé en ce que** la valeur de disponibilité du conducteur est déterminée après le déclenchement du processus de freinage d'essai en utilisant des signaux de sortie de capteurs tactiles sensibles à la pression, montés sur le véhicule automobile.

9. Procédé selon la revendication 1, **caractérisé en ce que** la valeur de disponibilité du conducteur est déterminée après le déclenchement du processus de freinage d'essai en utilisant des signaux de sortie de capteurs de vitesse de rotation des roues (306, 313) ou de capteurs de course (307) d'une suspension.

10. Dispositif pour la mise en œuvre d'un procédé selon l'une des revendications 1 à 9, comprenant au moins
un système de capteurs d'environnement conçu pour détecter la nécessité d'une décélération du véhicule, et
un appareil de commande qui est conçu pour,
en cas de nécessité d'une décélération du véhicule, effectuer avant celle-ci un processus de freinage d'essai indépendant du conducteur pendant une durée prédéfinie, et
est en outre conçu pour déterminer, pendant ou après l'exécution du processus de freinage d'essai, une valeur de disponibilité du conducteur pour la maîtrise de la décélération du véhicule détectée comme étant nécessaire, et
est en outre conçu pour déclencher une décélération du véhicule après la fin du processus de freinage d'essai, l'évolution dans le temps de la décélération du véhicule étant dépendante de la valeur de disponibilité du conducteur.
